# EUROPEAN PATENT APPLICATION

(11) **EP 4 746 257 A1**
(43) Date of publication of application: **20.05.2026**
(21) Application number: 24841959.0
(22) Date of filing: 22.03.2024
(51) Int. Cl.: H02K 3/50, H01R 11/11

(54) **STATOR, AXIAL FLUX MOTOR, ELECTRIC DRIVING APPARATUS, ELECTRIC DRIVING SYSTEM, AND ELECTRIC DEVICE**

(30) Priority: 20.07.2023 CN 202310897561
(71) Applicant: Contemporary Amperex Intelligence Technology (Shanghai) Limited, Shanghai 201306 (CN); Contemporary Amperex Technology Co., Limited, Ningde, Fujian 352100 (CN)
(72) Inventor: XIANG, Bin, Fengxian District, Shanghai 201306 (CN); HUANG, Liren, Fengxian District, Shanghai 201306 (CN); XIA, Ji, Fengxian District, Shanghai 201306 (CN)
(74) Representative: Gong, Jinping
(86) International application number: PCT/CN2024/083407
(87) International publication number: WO 2025/015957

(57) **Abstract**

Provided are a stator (111), an axial flux motor (11), an electric driving apparatus (10), an electric driving system (100), and an electric device. The stator (111) includes a stator housing (1111), a stator body (1112), and a lead-out wire (1113); an axial side of the stator housing (1111) is provided with a wire outlet; the stator body (1112) is accommodated in the stator housing (1111); and one end of the lead-out wire (1113) is connected to the stator body (1112), and the other end of the lead-out wire (1113) passes through the wire outlet.

## Description

### CROSS-REFERENCE TO RELATED APPLICATIONS

The present application claims priority to Chinese Patent Application No. 202310897561.5, filed on July 20, 2023 and entitled "STATOR, AXIAL FLUX MOTOR, ELECTRIC DRIVING APPARATUS, ELECTRIC DRIVING SYSTEM, AND ELECTRIC DEVICE", which is incorporated herein by reference in its entirety.

### TECHNICAL FIELD

The present application pertains to the field of motor technologies and more specifically relates to a stator, an axial flux motor, an electric driving apparatus, an electric driving system, and an electric device.

### BACKGROUND

An axial flux motor is a motor in which a magnetic flux direction is an axial direction. Due to a small axial dimension of the axial flux motor, the axial flux motor has increasingly gained favor. However, a radial dimension of the axial flux motor is relatively large. How to reduce the radial dimension of the axial flux motor is a technical problem that urgently needs to be solved.

### SUMMARY

One of the objectives of embodiments of the present application is to provide a stator, an axial flux motor, an electric driving apparatus, an electric driving system, and an electric device, so as to solve the technical problem in the related art that the axial flux motor has a relatively large radial dimension.

To achieve the above objective, the technical solution adopted by the embodiments of the present application is to provide a stator applied to an axial flux motor, where the stator includes:
a stator housing provided with a wire outlet on an axial side;
a stator body accommodated in the stator housing; and
a lead-out wire, where one end of the lead-out wire is connected to the stator body, and the other end of the lead-out wire passes through the wire outlet.

The stator provided by the embodiments of the present application has at least the following beneficial effects: the stator provided by the embodiments of the present application is provided with the wire outlet on the axial side of the stator housing, and the lead-out wire passes through the wire outlet, so that the lead-out wire can extend outward via the axial side of the stator housing. This can effectively utilize an axial space of the axial flux motor without the need to provide a wiring structure on a peripheral side of the stator housing, effectively reducing a radial dimension of the stator, thereby effectively reducing a radial dimension of the axial flux motor.

In some embodiments of the present application, the stator further includes a sealing member, where the sealing member is disposed between the lead-out wire and an edge of the wire outlet.

By adopting the above technical solution, a gap between the lead-out wire and the edge of the wire outlet is effectively sealed, which not only reduces the risk of outward leakage of substances accommodated in the stator housing, but also mitigates the ingress of external substances such as moisture and dust into the stator housing, thereby effectively improving the reliability of the stator.

In some embodiments of the present application, the sealing member includes a connecting portion and a sealing portion, a plurality of lead-out wires are provided, the connecting portion is configured to connect the plurality of lead-out wires, and the sealing portion is disposed between the connecting portion and the edge of the wire outlet.

By adopting the above technical solution, the sealing member can simultaneously seal gaps between the plurality of lead-out wires and the edge of the wire outlet without the need to provide a separate sealing member on each lead-out wire, effectively simplifying a sealing structure between the lead-out wires and the edge of the wire outlet, thereby effectively reducing the production cost of the stator and effectively improving the assembly efficiency of the stator.

In some embodiments of the present application, the connecting portion is injection-molded and connected to the plurality of lead-out wires.

By adopting the above technical solution, connection of the plurality of lead-out wires is facilitated, and gaps between the connecting portion and the lead-out wires are effectively sealed, thereby further improving the reliability of the stator.

In some embodiments of the present application, a peripheral side of the sealing member is provided with a slot, and the edge of the wire outlet is engaged in the slot.

By adopting the above technical solution, the risk of the sealing member detaching from the stator housing is effectively reduced, thereby further improving the reliability of the stator.

In some embodiments of the present application, the stator further includes a cooling medium, where the cooling medium is accommodated in the stator housing.

By adopting the above technical solution, the stator body can be in direct contact with the cooling medium. In other words, heat generated by the stator body during operation can be directly transferred to the cooling medium, thereby effectively improving the cooling efficiency of the stator and effectively improving the reliability of the stator.

In some embodiments of the present application, the lead-out wire includes a flexible portion and a rigid portion, where one end of the rigid portion is connected to the stator body, the other end of the rigid portion is connected to one end of the flexible portion, and the other end of the flexible portion passes through the wire outlet.

By adopting the above technical solution, after the rigid portion is connected to the stator body, the flexible portion can be bent so that an end of the flexible portion away from the rigid portion is aligned with the wire outlet, thereby effectively improving the alignment accuracy of the lead-out wire, facilitating the passage of the flexible portion through the wire outlet, and effectively improving the operation efficiency of assembly of the lead-out wire.

In some embodiments of the present application, the flexible portion includes a plurality of sheets, where the plurality of sheets are stacked and connected.

By adopting the above technical solution, the flexible portion can be made soft to facilitate an operation of bending the flexible portion.

In some embodiments of the present application, ends of the plurality of sheets close to the rigid portion are fused integrally and welded to the rigid portion.

By adopting the above technical solution, the connection strength between the flexible portion and the rigid portion is effectively improved, thereby effectively improving the reliability of the stator.

In some embodiments of the present application, ends of the plurality of sheets away from the rigid portion are fused integrally and pass through the wire outlet.

By adopting the above technical solution, the connection strength between the flexible portion and an external connector is effectively improved, thereby effectively improving the reliability of the stator.

In some embodiments of the present application, the flexible portion includes a connecting section, a bending section, and a lead-out section, where the bending section is connected between one end of the connecting section and one end of the lead-out section, the other end of the connecting section is connected to the rigid portion, and the other end of the lead-out section passes through the wire outlet.

By adopting the above technical solution, alignment of the lead-out section with the wire outlet and outward extension of the lead-out section through the wire outlet are facilitated, thereby effectively improving the operation efficiency of assembly of the lead-out wire.

In some embodiments of the present application, the bending section has an arc-shaped structure.

By adopting the above technical solution, the bending stress of the flexible portion is effectively reduced, thereby effectively reducing the risk of fracture of the lead-out wire.

Embodiments of the present application further provide an axial flux motor including the stator according to any one of the above embodiments.

The axial flux motor provided by the embodiments of the present application has at least the following beneficial effects: since the axial flux motor provided by the embodiments of the present application adopts the stator according to any one of the above embodiments, an axial dimension of the axial flux motor is effectively reduced.

In some embodiments of the present application, two stators are provided, the axial flux motor further includes a rotor, and the rotor is disposed between the two stators.

By adopting the above technical solution, the volume of a double-stator axial flux motor is effectively reduced.

In some embodiments of the present application, a side of the stator housing facing the rotor is provided with the wire outlet.

By adopting the above technical solution, on the premise of not increasing the axial dimension of the axial flux motor, the space between the two stators can be effectively utilized without the need to provide wiring structures on peripheral sides of stator housings of the two stators, thereby effectively reducing a radial dimension of the axial flux motor.

In some embodiments of the present application, the stator body includes an iron core and a winding wound on the iron core, where the two windings are connected in series or parallel via the lead-out wire.

By adopting the above technical solution, a connection method of the windings of the two stators can be selected according to actual application needs, so as to reasonably adjust the number of turns of each phase wire of each winding, thereby achieving flexible adjustment of the power of the axial flux motor.

In some embodiments of the present application, the axial flux motor further includes two rotors, and the stator is disposed between the two rotors.

By adopting the above technical solution, the volume of a double-rotor axial flux motor is effectively reduced.

In some embodiments of the present application, the stator body includes a first iron core, a second iron core, a first winding wound on the first iron core, and a second winding wound on the second iron core, where the lead-out wire is divided into a first lead-out wire connected to the first winding and a second lead-out wire connected to the second winding; two axial sides of the stator housing are each provided with the wire outlet; the first lead-out wire passes through the wire outlet on one axial side of the stator housing; and the second lead-out wire passes through the wire outlet on the other axial side of the stator housing.

By adopting the above technical solution, on the premise of not increasing the axial dimension of the axial flux motor, spaces of two axial sides of the stator can be effectively utilized without the need to provide the wiring structures on the peripheral sides of the stator housings of the two stators, thereby effectively reducing the radial dimension of the axial flux motor.

In some embodiments of the present application, the stator body includes a first iron core, a second iron core, a first winding wound on the first iron core, and a second winding wound on the second iron core, where the first winding and the second winding are connected in series or parallel via the lead-out wire.

By adopting the above technical solution, a connection method of the first winding and the second winding can be selected according to actual application needs, so as to reasonably adjust the number of turns of each phase wire of the first winding and the number of turns of each phase wire of the second winding, thereby achieving flexible adjustment of the power of the axial flux motor.

Embodiments of the present application further provide an electric driving apparatus including the axial flux motor according to any one of the above embodiments.

The electric driving apparatus provided by the embodiments of the present application has at least the following beneficial effects: since the electric driving apparatus provided by the embodiments of the present application adopts the axial flux motor according to any one of the above embodiments, the volume of the electric driving apparatus is effectively reduced.

Embodiments of the present application further provide an electric driving system including the above electric driving apparatus.

The electric driving system provided by the embodiments of the present application has at least the following beneficial effects: since the electric driving system provided by the embodiments of the present application adopts the above electric driving apparatus, the volume of the electric driving system is effectively reduced.

Embodiments of the present application further provide an electric device including the above electric driving system.

The electric device provided by the embodiments of the present application has at least the following beneficial effects: since the electric device provided by the embodiments of the present application adopts the above electric driving system, the volume of the electric device is effectively reduced.

### BRIEF DESCRIPTION OF DRAWINGS

In order to more clearly illustrate the technical solutions in the embodiments of the present application, the drawings needed to be used in the description of the embodiments or the prior art will be briefly described below. Obviously, the drawings in the following description are only some embodiments of the present application. For those of ordinary skill in the art, other drawings can also be obtained based on these drawings without creative efforts.
FIG. 1 is a schematic structural diagram of a vehicle according to an embodiment of the present application;
FIG. 2 is an exploded view of a battery according to an embodiment of the present application;
FIG. 3 is a schematic structural diagram of an electric driving apparatus according to an embodiment of the present application;
FIG. 4 is a schematic structural diagram of an axial flux motor according to an embodiment of the present application;
FIG. 5 is a first schematic diagram of a connection structure of two stator bodies in the axial flux motor shown in FIG. 4;
FIG. 6 is a second schematic diagram of a connection structure of two stator bodies in the axial flux motor shown in FIG. 4;
FIG. 7 is a schematic structural diagram of an axial flux motor according to another embodiment of the present application;
FIG. 8 is a schematic structural diagram of a lead-out wire according to an embodiment of the present application; and
FIG. 9 is a schematic structural diagram of a sealing member according to an embodiment of the present application.

The reference signs in the drawings are as follows:
1000. vehicle;
100. electric driving system;
10. electric driving apparatus;
11. axial flux motor; 111. stator; 1111. stator housing; 1112. stator body; 1113. lead-out wire; 1113a. first lead-out wire; 1113b. second lead-out wire; 11131. flexible portion; 11132. rigid portion; 11133. connecting section; 11134. bending section; 11135. lead-out section; 1114. sealing member; 1114a. first sealing member; 1114b. second sealing member; 11141. connecting portion; 11142. sealing portion; 11143. slot; 1115. power input terminal; 1116. power output terminal; 112. rotor; 12. controller; 13. transmission mechanism;
20. battery;
21. box body; 211. first portion; 212. second portion; and
22. battery cell.

### DESCRIPTION OF EMBODIMENTS

In order to make the technical problems to be solved, technical solutions, and beneficial effects of the present application clearer, the present application will be further described in detail below with reference to the drawings and embodiments. It should be understood that the specific embodiments described herein are only used to explain the present application and are not intended to limit the present application.

It should be noted that when an element is referred to as being "fixed to" or "disposed on" another element, it can be directly disposed on the another element or indirectly disposed on the another element. When an element is referred to as being "connected to" another element, it can be directly connected to the another element or indirectly connected to the another element.

It should be understood that the orientation or positional relationships indicated by terms such as "length", "width", "upper", "lower", "front", "rear", "left", "right", "vertical", "horizontal", "top", "bottom", "inner", "outer", and the like are based on the orientation or positional relationships shown in the drawings, and are merely for ease and brevity of description of the present application rather than indicating or implying that the means or elements mentioned must have specific orientations or must be constructed or manipulated according to specific orientations, and therefore shall not be construed as any limitation on the present application.

In addition, the terms "first" and "second" are only used for descriptive purposes and cannot be understood as indicating or implying relative importance or implicitly indicating the number of indicated technical features. Thus, features defined with "first" and "second" may explicitly or implicitly include one or more such features. In the description of the present application, "a plurality of" means two or more, unless otherwise explicitly and specifically defined.

A motor is a power apparatus of an electric device, and the motor is configured to convert electrical energy into mechanical energy to drive the electric device to operate. An axial flux motor refers to a motor in which a magnetic flux direction is an axial direction and a current-carrying conductor is arranged radially. The axial flux motor typically includes a rotor and a stator, where the rotor and the stator are substantially disk-shaped structures and arranged along an axial direction of the axial flux motor. During the operation of the axial flux motor, the rotor rotates while the stator remains stationary. The stator typically includes a stator housing and a stator body, where the stator body is disposed in the stator housing to isolate the stator body from the rotor and other components of the axial flux motor.

In the related art, a lead-out wire of the stator is connected to the stator body and extends from a peripheral side of the stator body to a peripheral side of the stator housing, and the lead-out wire passes through the peripheral side of the stator housing to extend outward so as to be connected to an external connector. However, since the lead-out wire is disposed in a protruding manner relative to the peripheral side of the stator housing, an inner diameter of a housing of the axial flux motor also needs to be increased accordingly to avoid the lead-out wire, but this will increase a radial dimension of the axial flux motor.

In order to reduce the radial dimension of the axial flux motor, the stator provided by the embodiments of the present application is provided with a wire outlet on an axial side of the stator housing, and the lead-out wire passes through the wire outlet, so that the lead-out wire can extend outward via the axial side of the stator housing. This can effectively utilize an axial space of the axial flux motor without the need to provide a wiring structure on the peripheral side of the stator housing, effectively reducing a radial dimension of the stator, thereby effectively reducing the radial dimension of the axial flux motor.

The axial flux motor provided by the embodiments of the present application can be applied to electric devices, where the electric devices may be but are not limited to vehicles, ships, aircraft, spacecraft, excavators, cranes, hoists, elevators, and the like, without specific limitation herein.

For ease of description, the following embodiments are described by taking an example in which an electric device according to an embodiment of the present application as a vehicle.

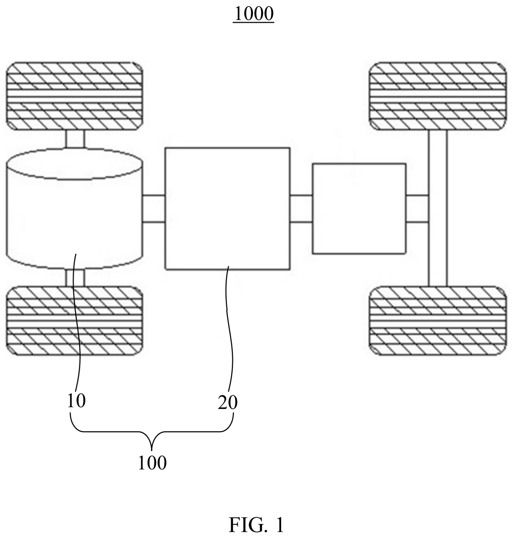

Referring to FIG. 1, FIG. 1 is a schematic structural diagram of a vehicle 1000 according to an embodiment of the present application. According to power sources, the vehicle 1000 may be a pure electric vehicle, a hybrid electric vehicle, an extended-range vehicle, or the like. According to drive modes, the vehicle 1000 may be a front-wheel drive vehicle, a rear-wheel drive vehicle, or a four-wheel drive vehicle. The vehicle 1000 includes a vehicle body and an electric driving system 100.

The vehicle body is a main support component of the vehicle 1000, and the vehicle body has an engine compartment and a passenger compartment, where the engine compartment is configured to accommodate power mechanisms, electric control mechanisms, driving mechanisms, and the like of the vehicle 1000. The passenger compartment is configured to provide operating space and riding space for occupants. When the vehicle 1000 is a front-wheel drive vehicle, the engine compartment is disposed at the head of the vehicle body, that is, the engine compartment is a front engine compartment. When the vehicle 1000 is a rear-wheel drive vehicle, the engine compartment is disposed at the tail of the vehicle body, that is, the engine compartment is a rear engine compartment. When the vehicle 1000 is a four-wheel drive vehicle, the engine compartment is divided into a front engine compartment and a rear engine compartment, where the front engine compartment is disposed at the head of the vehicle body, and the rear engine compartment is disposed at the tail of the vehicle body. The passenger compartment is disposed between the head and the tail of the vehicle body.

The electric driving system 100 is a power system of the vehicle 1000, and the electric driving system 100 is configured to convert electrical energy into mechanical energy and output the mechanical energy to wheels of the vehicle 1000 to drive the vehicle 1000 to travel. The electric driving system 100 is disposed on the vehicle body. Specifically, a portion of the electric driving system 100 can be disposed in the engine compartment, and another portion of the electric driving system 100 can be disposed at the bottom of the vehicle body.

Referring to FIG. 1, the electric driving system 100 according to this embodiment of the present application includes an electric driving apparatus 10 and a battery 20.

The electric driving apparatus 10 is configured to convert electrical energy provided by the battery 20 into mechanical energy and output the mechanical energy to the wheels of the vehicle 1000 to drive the vehicle 1000 to travel. The electric driving apparatus 10 is installed in the engine compartment. Specifically, when the vehicle 1000 is a front-wheel drive vehicle, the electric driving apparatus 10 is installed in the front engine compartment and configured to output the above mechanical energy to front wheels of the vehicle 1000 to drive the vehicle 1000 to travel. When the vehicle 1000 is a rear-wheel drive vehicle, the electric driving apparatus 10 is installed in the rear engine compartment and configured to output the above mechanical energy to rear wheels of the vehicle 1000 to drive the vehicle 1000 to travel. When the vehicle 1000 is a four-wheel drive vehicle, there are two electric driving apparatuses 10, where one electric driving apparatus 10 is installed in the front engine compartment and configured to output the above mechanical energy to the front wheels of the vehicle 1000, and the other electric driving apparatus 10 is installed in the rear engine compartment and configured to output the above mechanical energy to the rear wheels of the vehicle 1000 to drive the vehicle 1000 to travel.

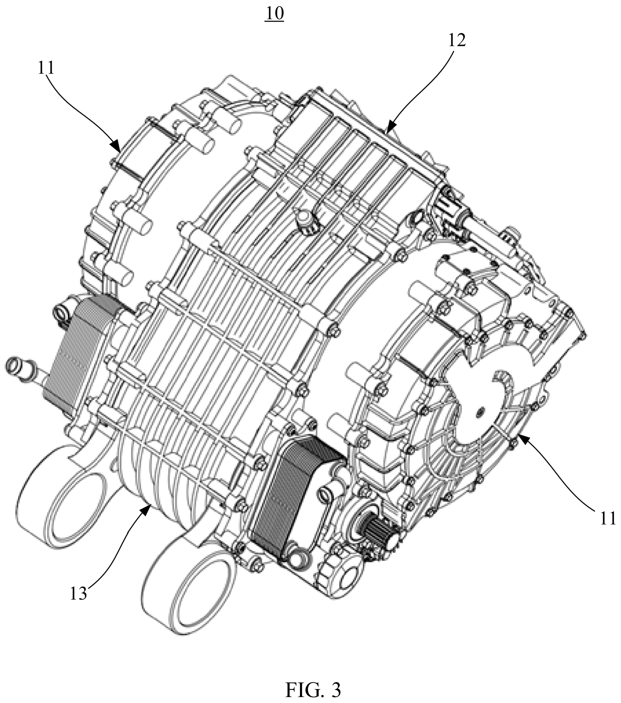

Referring to FIG. 3, the electric driving apparatus 10 includes an axial flux motor 11. The axial flux motor 11 is a main power output component of the electric driving apparatus 10 and is configured to convert the electrical energy provided by the battery 20 into mechanical energy. Additionally, the axial flux motor 11 can also serve as a generator, for example, to convert mechanical energy into electrical energy during kinetic energy recovery. One or more axial flux motors 11 may be provided. In some embodiments, two axial flux motors 11 are provided, where the two axial flux motors 11 are coaxially arranged, that is, central axes of the two axial flux motors 11 coincide. The electric driving apparatus 10 may further include a transmission mechanism 13. The transmission mechanism 13 is a power transmission mechanism of the electric driving apparatus 10, and the transmission mechanism 13 has a power input end and a power output end. The power input end of the transmission mechanism 13 is connected to a rotating shaft of the axial flux motor 11, and the power output end of the transmission mechanism 13 is connected to the wheels of the vehicle 1000. The transmission mechanism 13 can transmit the above mechanical energy to the wheels of the vehicle 1000 in a manner of changing a rotation speed and torque output by the transmission mechanism 13 relative to the axial flux motor 11. For example, the transmission mechanism 13 transmits the above mechanical energy to the wheels of the vehicle 1000 in a manner of reducing the rotation speed and increasing the torque relative to the axial flux motor 11. For another example, the transmission mechanism 13 transmits the above mechanical energy to the wheels of the vehicle 1000 in a manner of increasing the rotation speed and reducing the torque relative to the axial flux motor 11. Optionally, the transmission mechanism 13 may be but is not limited to a gear-shaft transmission mechanism, a worm transmission mechanism, a planetary gear transmission mechanism, a continuously variable transmission mechanism, or the like, without specific limitation herein. The electric driving apparatus 10 may further include a controller 12. The controller 12 is configured to convert direct current output by the battery 20 into alternating current and deliver the alternating current to the axial flux motor 11, and is also configured to control the operation of the axial flux motor 11, for example, controlling the start-stop, rotation speed, torque, and the like of the axial flux motor 11.

The axial flux motor 11 includes a stator 111 and a rotor 112. The rotor 112 is a rotational portion of the axial flux motor 11, and the stator 111 is a stationary portion of the axial flux motor 11. The axial flux motor 11 may further include a housing. The housing is configured to provide an installation environment for the stator 111 and the rotor 112 and also serves as a support component for the axial flux motor 11. Optionally, the housing may be an integrally formed component or an assembled component formed by assembling a plurality of portions. A material of the housing may be but is not limited to copper, iron, aluminum, stainless steel, aluminum alloy, plastic, or the like, without specific limitation herein.

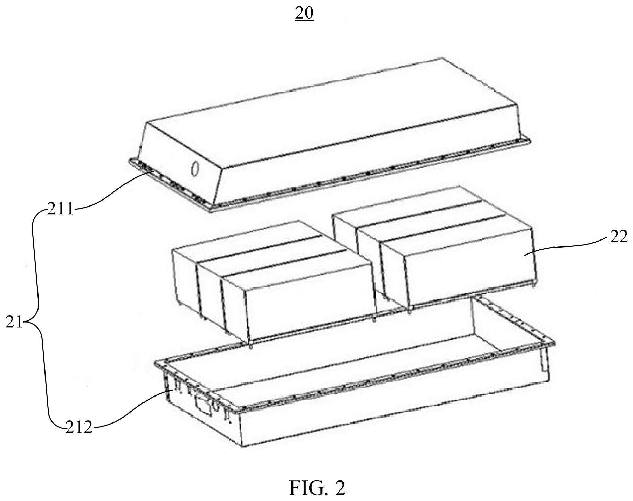

The battery 20 is configured to provide electrical energy for the electric driving apparatus 10, and the battery 20 may be disposed at the bottom, head, or tail of the vehicle 1000. Referring to FIG. 2, FIG. 2 is an exploded view of a battery 20 according to an embodiment of the present application. The battery 20 includes a box body 21 and a battery cell 22, where the battery cell 22 is accommodated in the box body 21. The box body 21 is configured to provide an accommodation space for the battery cell 22, and the box body 21 may adopt various structures. In some embodiments, the box body 21 may include a first portion 211 and a second portion 212, where the first portion 211 and the second portion 212 fit each other, and the first portion 211 and the second portion 212 jointly define the accommodation space for accommodating the battery cell 22. The second portion 212 may be a hollow structure with an opening at one end, and the first portion 211 may be a plate-like structure. The first portion 211 covers an opening side of the second portion 212, so that the first portion 211 and the second portion 212 jointly define the accommodation space. The first portion 211 and the second portion 212 may alternatively each be a hollow structure with an opening on one side, and the opening side of the first portion 211 is engaged with the opening side of the second portion 212. Certainly, the box body 21 formed by the first portion 211 and the second portion 212 may have various shapes, such as a cylinder and a cuboid.

In some embodiments, the box body 21 can serve as a portion of the chassis structure of the vehicle 1000. For example, a portion of the box body 21 may become at least a portion of the floor of the vehicle 1000, or a portion of the box body 21 may become at least a portion of a cross beam and longitudinal beam of the vehicle 1000.

Certainly, in some embodiments, the battery 20 may not include the box body 21, but a plurality of battery cells 22 are electrically connected, form an entirety through essential fixing structures, and then assembled into the vehicle 1000.

In the battery 20, there may be a plurality of battery cells 22, and the plurality of battery cells 22 can be connected in series, parallel, or series-parallel, where being connected in series-parallel means that the plurality of battery cells 22 are connected in both series and parallel. The plurality of battery cells 22 can be directly connected in series, parallel, or series-parallel, and then an entirety formed by the plurality of battery cells 22 is accommodated in the box body 21. Certainly, the battery 20 may alternatively be formed by first connecting the plurality of battery cells 22 in series, parallel, or series-parallel to form battery modules, and then connecting a plurality of battery modules in series, parallel, or series-parallel to form an entirety which is accommodated in the box body 21. The battery 20 may further include other functional components. For example, the battery 20 may further include a busbar component configured to achieve electrical connection among the plurality of battery cells 22.

Each battery cell 22 may be a secondary battery or a primary battery, where a secondary battery refers to a battery cell 22 that can be reused by activating active materials through charging after discharge, and a primary battery refers to a battery cell 22 that cannot be reused by activating active materials through charging after the electrical energy is exhausted; the battery cell 22 may alternatively be a lithium-ion battery, a sodium-ion battery, a lithium-sodium-ion battery, a lithium-metal battery, a sodium-metal battery, a lithium-sulfur battery, a magnesium-ion battery, a nickel-hydrogen battery, a nickel-cadmium battery, a lead-acid battery, or the like, without limitation thereto. The battery cell 22 may be a cylindrical battery cell, a prismatic battery cell, a pouch battery cell, or a battery cell 22 of other shapes, where the prismatic battery cell includes a square-shell battery cell, a blade-shaped battery cell, and a polygonal prismatic battery cell. The polygonal prismatic battery cell is, for example, a hexagonal prismatic battery cell, without particular limitation in the present application.

The stator 111 provided by the embodiments of the present application will be described below with reference to the drawings.

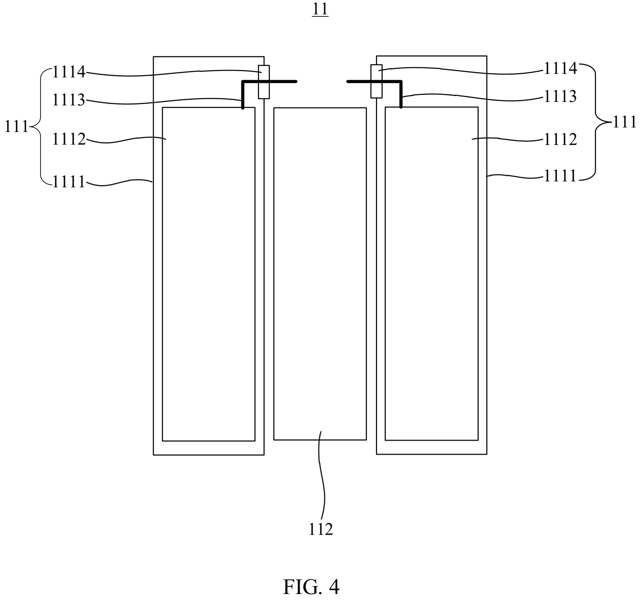

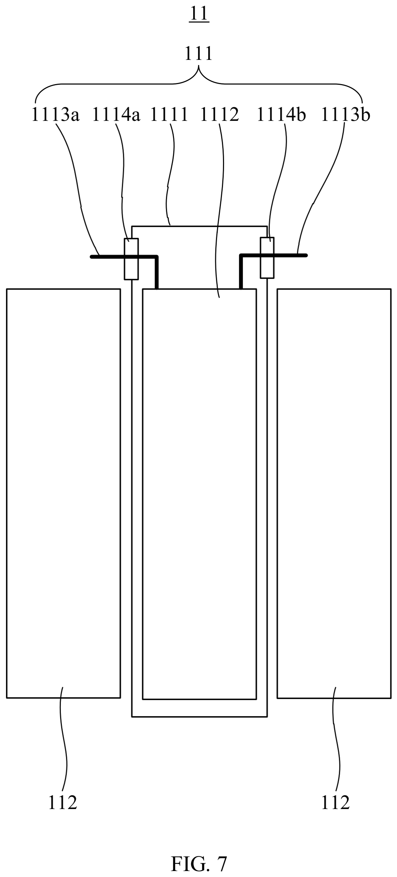

According to a first aspect, referring to FIGs. 4 and 7 together, an embodiment of the present application provides a stator 111 applied to an axial flux motor 11. The stator 111 includes a stator housing 1111, a stator body 1112, and a lead-out wire 1113. An axial side of the stator housing 1111 is provided with a wire outlet. The stator body 1112 is accommodated in the stator housing 1111. One end of the lead-out wire 1113 is connected to the stator body 1112, and the other end of the lead-out wire 1113 passes through the wire outlet.

The stator housing 1111 is configured to provide an internal environment of the stator 111. Optionally, the stator housing 1111 may be an integrally formed component or an assembled component formed by assembling a plurality of portions. A material of the stator housing 1111 may be but is not limited to copper, iron, aluminum, stainless steel, aluminum alloy, plastic, or the like, without specific limitation herein. In some embodiments, when the stator housing 1111 includes a plurality of portions, some portions of the stator housing 1111 may be made of metal materials such as copper, iron, aluminum, stainless steel, and aluminum alloy, and other portions of the stator housing 1111 may be made of plastic, without specific limitation herein.

The axial side of the stator housing 1111 refers to a side of the stator housing 1111 through which a central axis of the stator 111 passes. The wire outlet is provided on the axial side of the stator housing 1111. Understandably, the wire outlet runs through the axial side of the stator housing 1111, so that the internal environment of the stator 111 is in communication with an external environment through the wire outlet. The shape of the wire outlet may be but is not limited to a circular shape, a square shape, an elliptical shape, or a triangular shape, without specific limitation herein.

The stator body 1112 is a body portion of the stator 111. The stator body 1112 is magnetically coupled to the rotor 112 to drive the rotor 112 to rotate. The stator body 1112 may include an iron core and a winding. The winding is wound on the iron core. The iron core and the winding together form a magnetic circuit of the axial flux motor 11. When the winding is energized, the winding generates an electromagnetic field. The electromagnetic field and the rotor 112 are magnetically coupled to each other to drive the rotor 112 to rotate. In some embodiments, the iron core may be an assembled component formed by assembling a plurality of portions. For example, the iron core is formed by stacking a plurality of punched sheets. In other embodiments, the iron core may alternatively be an integrally formed component. For example, the iron core is integrally formed through a casting process. In some embodiments, the stator body 1112 may further include a base. A plurality of iron cores are fixedly disposed on the base and annularly arranged around a rotating shaft of the rotor 112. A middle portion of the base may be provided with a shaft cavity. The rotating shaft of the rotor 112 passes through the shaft cavity.

The lead-out wire 1113 is a component configured to input or output the current of the above winding. One end of the lead-out wire 1113 is electrically connected to the winding, and the other end of the lead-out wire 1113 passes through the wire outlet and is electrically connected to an external connector. A connection method between the lead-out wire 1113 and the winding or the external connector may be but is not limited to welding, fastening connection, or the like, without specific limitation herein. The lead-out wire 1113 may be a round wire or a flat wire. A material of the lead-out wire 1113 may be but is not limited to copper, aluminum, aluminum alloy, iron, stainless steel, or the like, without specific limitation herein.

The stator 111 provided by the embodiments of the present application is provided with the wire outlet on the axial side of the stator housing 1111, and the lead-out wire 1113 passes through the wire outlet, so that the lead-out wire 1113 can extend outward via the axial side of the stator housing 1111. This can effectively utilize an axial space of the axial flux motor 11 without the need to provide a wiring structure on a peripheral side of the stator housing 1111, effectively reducing a radial dimension of the stator 111, thereby effectively reducing a radial dimension of the axial flux motor 11.

In some embodiments of the present application, referring to FIGs. 4 and 7 together, the stator 111 further includes a sealing member 1114, where the sealing member 1114 is disposed between the lead-out wire 1113 and an edge of the wire outlet.

The sealing member 1114 is a component configured to seal a gap between the lead-out wire 1113 and the edge of the wire outlet. In some embodiments, the sealing member 1114 may be an integrally formed component. For example, the sealing member 1114 is made of a flexible material through an integral forming process. In some other embodiments, the sealing member 1114 may be an assembled component formed by assembling a plurality of portions. For example, a portion of the sealing member 1114 is made of a rigid material and disposed on the lead-out wire 1113, and another portion of the sealing member 1114 is made of a flexible material and pressed against between the edge of the wire outlet and a peripheral side of the rigid material of the sealing member 1114. It should be noted that the above flexible material may be but is not limited to rubber, silicone, or the like, without specific limitation herein. The above rigid material may be but is not limited to metal, hard plastic, or the like, without specific limitation herein. Understandably, an outer contour shape of the sealing member 1114 matches the shape of the wire outlet. For example, when the shape of the wire outlet is circular, the outer contour shape of the sealing member 1114 is also circular.

By adopting the above technical solution, the gap between the lead-out wire 1113 and the edge of the wire outlet is effectively sealed, which not only reduces the risk of outward leakage of substances accommodated in the stator housing 1111, but also mitigates the ingress of external substances such as moisture and dust into the stator housing 1111, thereby effectively improving the reliability of the stator 111.

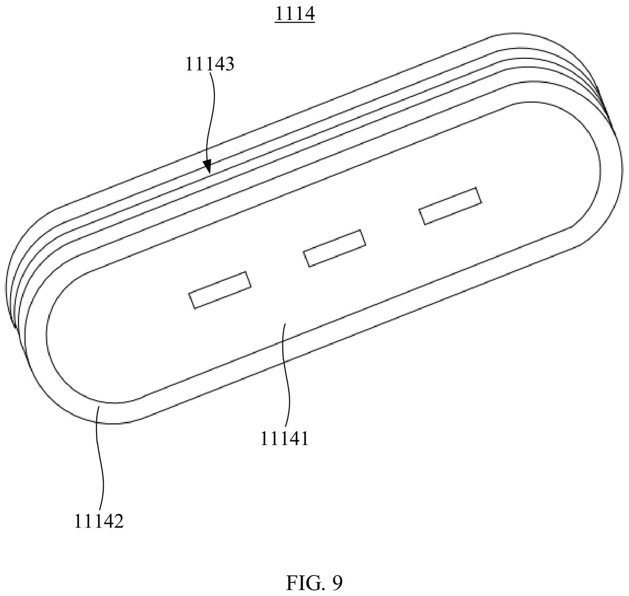

In some embodiments of the present application, referring to FIG. 9, the sealing member 1114 includes a connecting portion 11141 and a sealing portion 11142. A plurality of lead-out wires 1113 are provided. The connecting portion 11141 is configured to connect the plurality of lead-out wires 1113. The sealing portion 11142 is disposed between the connecting portion 11141 and the edge of the wire outlet.

The sealing portion 11142 is a main portion of the sealing member 1114. Understandably, the sealing portion 11142 is made of a flexible material and configured to seal a gap between a peripheral side of the connecting portion 11141 and the edge of the wire outlet.

The connecting portion 11141 is a portion of the sealing member 1114 for connecting the plurality of lead-out wires 1113. In some embodiments, the connecting portion 11141 may be made of a rigid material. For example, the connecting portion 11141 is formed on the plurality of lead-out wires 1113 through an injection molding process using hard plastic to connect the plurality of lead-out wires 1113 together. Certainly, in other embodiments, the connecting portion 11141 may alternatively be made of a flexible material.

By adopting the above technical solution, the sealing member 1114 can simultaneously seal gaps between the plurality of lead-out wires 1113 and the edge of the wire outlet without the need to provide a separate sealing member 1114 on each lead-out wire 1113, effectively simplifying a sealing structure between the lead-out wires 1113 and the edge of the wire outlet, thereby effectively reducing the production cost of the stator 111 and effectively improving the assembly efficiency of the stator 111.

In some embodiments of the present application, the connecting portion 11141 is injection-molded and connected to the plurality of lead-out wires 1113.

In other words, in these embodiments, the connecting portion 11141 is made of plastic. Specifically, during manufacturing, the plurality of lead-out wires 1113 are placed in a molding cavity of a mold, a raw material is injected into the molding cavity until the raw material fills the molding cavity, and after the raw material is solidified, the above connecting portion 11141 is formed and connects the plurality of lead-out wires 1113 together.

By adopting the above technical solution, connection of the plurality of lead-out wires 1113 is facilitated, and gaps between the connecting portion 11141 and the lead-out wires 1113 are effectively sealed, thereby further improving the reliability of the stator 111.

In some embodiments of the present application, referring to FIG. 9, a peripheral side of the sealing member 1114 is provided with a slot 11143, and the edge of the wire outlet is engaged in the slot 11143.

The slot 11143 is a portion recessed on the peripheral side of the sealing member 1114. The slot 11143 extends along a circumferential direction of the sealing member 1114 to form a closed-loop structure, and the edge of the wire outlet is engaged in the slot 11143, so that the sealing member 1114 is relatively fixed to the stator housing 1111. In some embodiments, when the sealing member 1114 includes the connecting portion 11141 and the sealing portion 11142, the slot 11143 is recessed on a peripheral side of the sealing portion 11142.

By adopting the above technical solution, the risk of the sealing member 1114 detaching from the stator housing 1111 is effectively reduced, thereby further improving the reliability of the stator 111.

Certainly, there may be various fixing methods for the sealing member 1114 and the stator housing 1111. For example, glue can be applied between the sealing member 1114 and the edge of the wire outlet so as to adhesively fix the sealing member 1114 to the stator housing 1111.

In some embodiments of the present application, the stator 111 further includes a cooling medium (not shown in the figure), where the cooling medium is accommodated in the stator housing 1111.

The cooling medium is a medium for absorbing heat generated by the stator body 1112. In some embodiments, the cooling medium can be statically accommodated in the stator housing 1111. In some other embodiments, the stator housing 1111 is provided with a liquid inlet and a liquid outlet. The cooling medium can enter the stator housing 1111 via the liquid inlet and leave the stator housing 1111 via the liquid outlet, so that the cooling medium can cool the stator body 1112 in a circulating flow manner. Optionally, the cooling medium may be but is not limited to cooling oil, cooling water, or the like, without specific limitation herein.

By adopting the above technical solution, the stator body 1112 can be in direct contact with the cooling medium. In other words, heat generated by the stator body 1112 during operation can be directly transferred to the cooling medium, thereby effectively improving the cooling efficiency of the stator 111 and effectively improving the reliability of the stator 111.

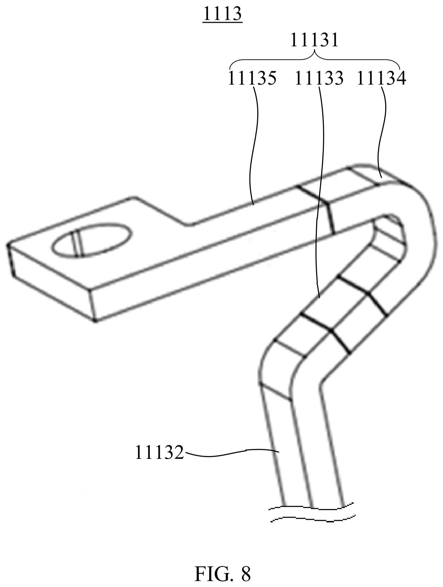

In some embodiments of the present application, referring to FIG. 8, the lead-out wire 1113 includes a flexible portion 11131 and a rigid portion 11132, where one end of the rigid portion 11132 is connected to the stator body 1112, the other end of the rigid portion 11132 is connected to one end of the flexible portion 11131, and the other end of the flexible portion 11131 passes through the wire outlet.

Understandably, the stiffness of the flexible portion 11131 is less than the stiffness of the rigid portion 11132. One end of the rigid portion 11132 being connected to the stator body 1112 means that the rigid portion 11132 is electrically connected to a winding of the stator body 1112. A connection method of the rigid portion 11132 and the flexible portion 11131 may be but is not limited to welding, fastening connection, or the like, without specific limitation herein.

By adopting the above technical solution, after the rigid portion 11132 is connected to the stator body 1112, the flexible portion 11131 can be bent so that an end of the flexible portion 11131 away from the rigid portion 11132 is aligned with the wire outlet, thereby effectively improving the alignment accuracy of the lead-out wire 1113, facilitating the passage of the flexible portion 11131 through the wire outlet, and effectively improving the operation efficiency of assembly of the lead-out wire 1113.

In some embodiments of the present application, the flexible portion 11131 includes a plurality of sheets (not shown in the figure), where the plurality of sheets are stacked and connected.

The plurality of sheets are stacked and connected along a thickness direction of the sheets. There may be various connection methods for two adjacent sheets. For example, two adjacent sheets are bonded. For another example, edges of two adjacent sheets are welded, without specific limitation herein.

By adopting the above technical solution, the flexible portion 11131 can be made soft to facilitate an operation of bending the flexible portion 11131.

In some embodiments of the present application, ends of the plurality of sheets close to the rigid portion 11132 are fused integrally and welded to the rigid portion 11132.

In these embodiments, after the plurality of sheets are stacked, the ends of the plurality of sheets close to the rigid portion 11132 are subjected to heating treatment to melt the ends of the plurality of sheets close to the rigid portion 11132. After a melted portion of the flexible portion 11131 is resolidified, the ends of the plurality of sheets close to the rigid portion 11132 are fused into an entirety. The entirety is welded to the rigid portion 11132 to connect the flexible portion 11131 to the rigid portion 11132.

By adopting the above technical solution, the connection strength between the flexible portion 11131 and the rigid portion 11132 is effectively improved, thereby effectively improving the reliability of the stator 111.

In some embodiments of the present application, ends of the plurality of sheets away from the rigid portion 11132 are fused integrally and pass through the wire outlet.

In these embodiments, after the plurality of sheets are stacked, the ends of the plurality of sheets away from the rigid portion 11132 are subjected to heating treatment to melt the ends of the plurality of sheets away from the rigid portion 11132. After the melted portion of the flexible portion 11131 is resolidified, the ends of the plurality of sheets away from the rigid portion 11132 are fused into an entirety. The entirety passes through the wire outlet and is connected to an external connector.

By adopting the above technical solution, the connection strength between the flexible portion 11131 and the external connector is effectively improved, thereby effectively improving the reliability of the stator 111.

Certainly, in other embodiments, the flexible portion 11131 and the rigid portion 11132 may be made of different conductive materials, so that the stiffness of the flexible portion 11131 is less than the stiffness of the rigid portion 11132. For example, the flexible portion 11131 is made of an aluminum material, and the rigid portion 11132 is made of a copper material.

In some embodiments of the present application, referring to FIG. 8, the flexible portion 11131 includes a connecting section 11133, a bending section 11134, and a lead-out section 11135, where the bending section 11134 is connected between one end of the connecting section 11133 and one end of the lead-out section 11135, the other end of the connecting section 11133 is connected to the rigid portion 11132, and the other end of the lead-out section 11135 passes through the wire outlet.

The connecting section 11133 is a portion configured to be connected to the rigid portion 11132. The lead-out section 11135 is a portion configured to be connected to the external connector. The bending section 11134 is a portion configured to change an extension direction of the flexible portion 11131.

When the flexible portion 11131 includes a plurality of sheets, ends of the plurality of sheets close to the rigid portion 11132 are fused to form the above connecting section 11133, ends of the plurality of sheets away from the rigid portion 11132 are fused to form the above lead-out section 11135, and middle portions of the plurality of sheets are stacked to form the above bending section 11134.

By adopting the above technical solution, alignment of the lead-out section 11135 with the wire outlet and outward extension of the lead-out section through the wire outlet are facilitated, thereby effectively improving the operation efficiency of assembly of the lead-out wire 1113.

In some embodiments of the present application, referring to FIG. 8, the bending section 11134 has an arc-shaped structure.

By adopting the above technical solution, the strength of the flexible portion 11131 can be reduced, which is conducive to adjusting a bending direction of the flexible portion 11131 to adapt to a position of the wire outlet, and can also effectively reduce the bending stress of the flexible portion 11131, thereby effectively reducing the risk of fracture of the lead-out wire 1113.

According to a second aspect, referring to FIGs. 4 and 7 together, an embodiment of the present application provides an axial flux motor 11 including the stator 111 according to any one of the above embodiments.

Since the axial flux motor 11 provided by this embodiment of the present application adopts the stator 111 according to any one of the above embodiments, an axial dimension of the axial flux motor 11 is effectively reduced.

In some embodiments of the present application, referring to FIG. 4, two stators 111 are provided, the axial flux motor 11 further includes a rotor 112, and the rotor 112 is disposed between the two stators 111.

Understandably, the rotor 112 is coaxially arranged with the two stators 111, that is, a central axis of the rotor 112 coincides with central axes of the two stators 111.

By adopting the above technical solution, the volume of a double-stator axial flux motor 11 is effectively reduced.

In some embodiments of the present application, referring to FIG. 4, a side of the stator housing 1111 facing the rotor 112 is provided with the wire outlet.

In other words, the lead-out wire 1113 extends outward through the side of the stator housing 1111 facing the rotor 112.

In some embodiments, an outer diameter of the rotor 112 is smaller than outer diameters of the two stators 111. Since the rotor 112 is coaxially arranged with the two stators 111, in a radial direction of the axial flux motor 11, peripheral sides of the two stators 111 protrude beyond a peripheral side of the rotor 112, so that a side of one stator housing 1111 facing the rotor 112, the peripheral side of the rotor 112, and a side of the other stator housing 1111 facing the rotor 112 enclose a wiring space. The lead-out wire 1113 passes through the wire outlet to enter the wiring space.

By adopting the above technical solution, on the premise of not increasing the axial dimension of the axial flux motor 11, the space between the two stators 111 can be effectively utilized without the need to provide wiring structures on peripheral sides of stator housings 1111 of the two stators 111, thereby effectively reducing a radial dimension of the axial flux motor 11.

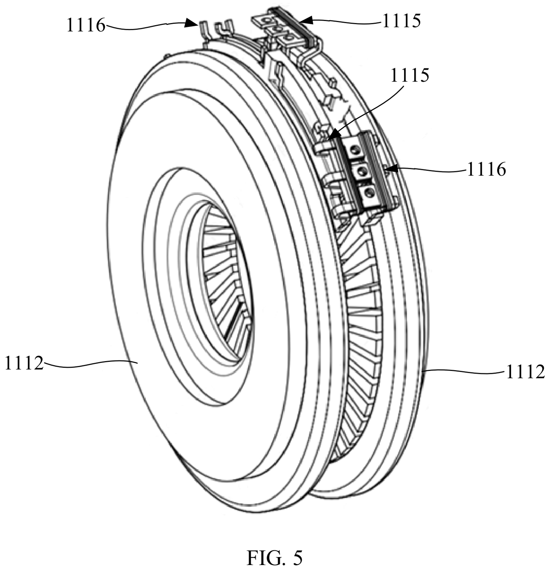

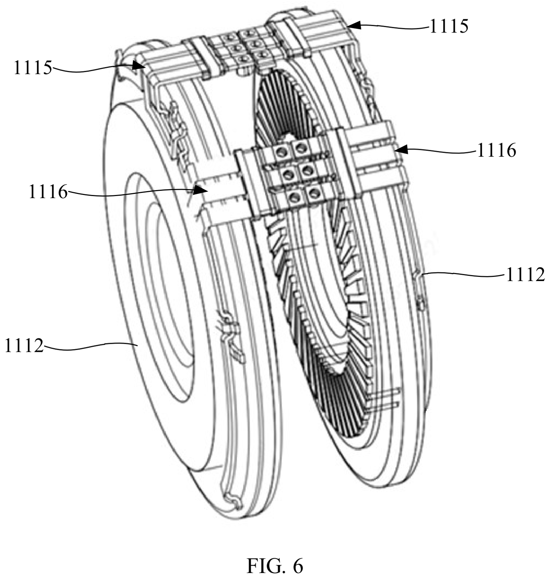

In some embodiments of the present application, referring to FIGs. 5 and 6 together, windings of two stator bodies 1112 are connected in series or parallel via the lead-out wire 1113.

In some embodiments, referring to FIG. 5, the axial flux motor 11 is a three-phase motor. A plurality of lead-out wires 1113 are provided. The plurality of lead-out wires 1113 are divided into three positive lead-out wires and three negative lead-out wires. One end of each of the three positive lead-out wires is connected in one-to-one correspondence to a positive terminal of each of three-phase wires of a winding, and the other ends of the three positive lead-out wires are electrically connected through a wiring terminal to form a power input terminal 1115. The three negative lead-out wires are connected in one-to-one correspondence to a negative terminal of each of the three-phase wires of the winding, and the other ends of the three negative lead-out wires are electrically connected through a wiring terminal to form a power output terminal 1116. A power input terminal 1115 of a first stator body 1112 serves as a power supply point of the axial flux motor 11, and a power output terminal 1116 of the stator body 1112 is electrically connected to a power input terminal 1115 of a second stator body 1112 through a wiring terminal. A power output terminal 1116 of the second stator body 1112 serves as a neutral point of the axial flux motor 11, so that the two stator bodies 1112 are connected in series.

In some other embodiments, the axial flux motor 11 is a two-phase motor. A plurality of lead-out wires 1113 are provided. The plurality of lead-out wires 1113 are divided into two positive lead-out wires and two negative lead-out wires. One end of each of the two positive lead-out wires is connected in one-to-one correspondence to a positive terminal of each of two-phase wires of a winding, and the other ends of the two positive lead-out wires are electrically connected through a wiring terminal to form a power input terminal 1115. The two negative lead-out wires are connected in one-to-one correspondence to a negative terminal of each of the two-phase wires of the winding, and the other ends of the two negative lead-out wires are electrically connected through a wiring terminal to form a power output terminal 1116. A power input terminal 1115 of a first stator body 1112 serves as a power supply point of the axial flux motor 11, and a power output terminal 1116 of the stator body 1112 is electrically connected to a power input terminal 1115 of a second stator body 1112 through a wiring terminal. A power output terminal 1116 of the second stator body 1112 serves as a neutral point of the axial flux motor 11, so that the two stator bodies 1112 are connected in series.

The windings of the two stator bodies 1112 are connected in series, so that the two stators 111 can obtain the same current excitation, which is conducive to reducing a magnetic field strength difference between the two stators 111, thereby making the magnetic pulling force of the axial flux motor 11 more balanced and effectively improving the performance of the axial flux motor 11.

In still some other embodiments, referring to FIG. 6, the axial flux motor 11 is a three-phase motor. A plurality of lead-out wires 1113 are provided. The plurality of lead-out wires 1113 are divided into three positive lead-out wires and three negative lead-out wires. One end of each of the three positive lead-out wires is connected in one-to-one correspondence to a positive terminal of each of three-phase wires of a winding, and the other ends of the three positive lead-out wires are electrically connected through a wiring terminal to form a power input terminal 1115. The three negative lead-out wires are connected in one-to-one correspondence to a negative terminal of each of the three-phase wires of the winding, and the other ends of the three negative lead-out wires are electrically connected through a wiring terminal to form a power output terminal 1116. A power input terminal 1115 of a first stator body 1112 is electrically connected to a power input terminal 1115 of a second stator body 1112 to form a power supply point of the axial flux motor 11, and a power output terminal 1116 of the first stator body 1112 is electrically connected to a power output terminal 1116 of the second stator body 1112 to form a neutral point of the axial flux motor 11, so that the two stator bodies 1112 are connected in parallel.

In yet some other embodiments, the axial flux motor 11 is a two-phase motor. A plurality of the lead-out wires 1113 are provided. The plurality of lead-out wires 1113 are divided into two positive lead-out wires and two negative lead-out wires. One end of each of the two positive lead-out wires is connected in one-to-one correspondence to a positive terminal of each of two-phase wires of a winding, and the other ends of the two positive lead-out wires are electrically connected through a wiring terminal to form a power input terminal 1115. The two negative lead-out wires are connected in one-to-one correspondence to a negative terminal of each of the two-phase wires of the winding, and the other ends of the two negative lead-out wires are electrically connected through a wiring terminal to form a power output terminal 1116. A power input terminal 1115 of a first stator body 1112 is electrically connected to a power input terminal 1115 of a second stator body 1112 to form a power supply point of the axial flux motor 11. A power output terminal 1116 of the first stator body 1112 is electrically connected to a power output terminal 1116 of the second stator body 1112 to form a neutral point of the axial flux motor 11, so that the two stator bodies 1112 are connected in parallel.

By connecting the windings of the two stator bodies 1112 in parallel, the two stators 111 can have completely identical lead-out structures, thereby effectively reducing the manufacturing cost of the axial flux motor 11.

In some embodiments of the present application, referring to FIG. 7, the axial flux motor 11 further includes two rotors 112, and the stator 111 is disposed between the two rotors 112.

Understandably, the stator 111 is coaxially arranged with the two rotors 112, that is, a central axis of the stator 111 coincides with central axes of the two rotors 112.

By adopting the above technical solution, the volume of a double-rotor axial flux motor 11 is effectively reduced.

In some embodiments of the present application, referring to FIG. 7, the stator body 1112 includes a first iron core, a second iron core, a first winding wound on the first iron core, and a second winding wound on the second iron core, where the lead-out wire 1113 is divided into a first lead-out wire 1113a connected to the first winding and a second lead-out wire 1113b connected to the second winding. Two axial sides of the stator housing 1111 are each provided with the wire outlet. The first lead-out wire 1113a passes through the wire outlet on one axial side of the stator housing 1111. The second lead-out wire 1113b passes through the wire outlet on the other axial side of the stator housing 1111.

Understandably, the first iron core and the first winding together form a first magnetic circuit of the axial flux motor 11. When the first winding is energized, the first winding generates a first electromagnetic field. The first electromagnetic field and a rotor 112 are magnetically coupled to each other to drive the rotor 112 to rotate. The second iron core and the second winding together form a second magnetic circuit of the axial flux motor 11. When the second winding is energized, the second winding generates a second electromagnetic field. The second electromagnetic field and the other rotor 112 are magnetically coupled to each other to drive the rotor 112 to rotate.

In some embodiments, an outer diameter of the stator 111 is larger than outer diameters of the two rotors 112. Since the stator 111 is coaxially arranged with the two rotors 112, in a radial direction of the axial flux motor 11, the peripheral side of the stator 111 protrudes beyond peripheral sides of the two rotors 112, so that wiring spaces are formed between one axial side of the stator housing 1111 and the peripheral side of one rotor 112 and between the other axial side of the stator housing 1111 and the peripheral side of the other rotor 112. The first lead-out wire 1113a and the second lead-out wire 1113b pass through the corresponding wire outlets into the corresponding wiring spaces.

In these embodiments, the above sealing member 1114 is divided into a first sealing member 1114a and a second sealing member 1114b. The first sealing member 1114a is disposed between the first lead-out wire 1113a and an edge of the corresponding wire outlet. The second sealing member 1114b is disposed between the second lead-out wire 1113b and an edge of the corresponding wire outlet.

By adopting the above technical solution, on the premise of not increasing the axial dimension of the axial flux motor 11, spaces of two axial sides of the stator 111 can be effectively utilized without the need to provide the wiring structures on the peripheral sides of the stator housings 1111 of the two stators 111, thereby effectively reducing the radial dimension of the axial flux motor 11.

In some embodiments of the present application, the first winding and the second winding are connected in series or parallel via the lead-out wire 1113.

In some embodiments, the axial flux motor 11 is a three-phase motor. A plurality of lead-out wires 1113 are provided. The plurality of lead-out wires 1113 are divided into three first positive lead-out wires, three first negative lead-out wires, three second positive lead-out wires, and three second negative lead-out wires. One end of each of the three first positive lead-out wires is connected in one-to-one correspondence to a positive terminal of each of three-phase wires of the first winding, and the other ends of the three first positive lead-out wires are electrically connected through a wiring terminal to form a first power input terminal. The three first negative lead-out wires are connected in one-to-one correspondence to negative terminals of the three-phase wires of the first winding, and the other ends of the three first negative lead-out wires are electrically connected through a wiring terminal to form a first power output terminal. One end of each of the three second positive lead-out wires is connected in one-to-one correspondence to a positive terminal of each of three-phase wires of the second winding, and the other ends of the three second positive lead-out wires are electrically connected through a wiring terminal to form a second power input terminal. The three second negative lead-out wires are connected in one-to-one correspondence to negative terminals of the three-phase wires of the second winding, and the other ends of the three second negative lead-out wires are electrically connected through a wiring terminal to form a second power output terminal. The first power input terminal serves as a power supply point of the axial flux motor 11. The first power output terminal is electrically connected to the second power input terminal through a wiring terminal. The second power output terminal serves as a neutral point of the axial flux motor 11, so that the first winding and the second winding are connected in series.

In some other embodiments, the axial flux motor 11 is a two-phase motor. A plurality of the lead-out wires 1113 are provided. The plurality of lead-out wires 1113 are divided into two first positive lead-out wires, two first negative lead-out wires, two second positive lead-out wires, and two second negative lead-out wires. One end of each of the two first positive lead-out wires is connected in one-to-one correspondence to a positive terminal of each of two-phase wires of the first winding, and the other ends of the two first positive lead-out wires are electrically connected through a wiring terminal to form a first power input terminal. The two first negative lead-out wires are connected in one-to-one correspondence to negative terminals of the two-phase wires of the first winding, and the other ends of the two first negative lead-out wires are electrically connected through a wiring terminal to form a first power output terminal. One end of each of the two second positive lead-out wires is connected in one-to-one correspondence to a positive terminal of each of two-phase wires of the second winding, and the other ends of the two second positive lead-out wires are electrically connected through a wiring terminal to form a second power input terminal. The two second negative lead-out wires are connected in one-to-one correspondence to negative terminals of the two-phase wires of the second winding, and the other ends of the two second negative lead-out wires are electrically connected through a wiring terminal to form a second power output terminal. The first power input terminal serves as a power supply point of the axial flux motor 11. The first power output terminal is electrically connected to the second power input terminal through a wiring terminal. The second power output terminal serves as a neutral point of the axial flux motor 11, so that the first winding and the second winding are connected in series.

The first winding and the second winding are connected in series, so that the first winding and the second winding can obtain the same current excitation, which is conducive to reducing a magnetic field strength difference between the first winding and the second winding, thereby making the magnetic pulling force of the axial flux motor 11 more balanced and effectively improving the performance of the axial flux motor 11.

In still some other embodiments, the axial flux motor 11 is a three-phase motor. A plurality of lead-out wires 1113 are provided. The plurality of lead-out wires 1113 are divided into three first positive lead-out wires, three first negative lead-out wires, three second positive lead-out wires, and three second negative lead-out wires. One end of each of the three first positive lead-out wires is connected in one-to-one correspondence to a positive terminal of each of three-phase wires of the first winding, and the other ends of the three first positive lead-out wires are electrically connected through a wiring terminal to form a first power input terminal. The three first negative lead-out wires are connected in one-to-one correspondence to negative terminals of the three-phase wires of the first winding, and the other ends of the three first negative lead-out wires are electrically connected through a wiring terminal to form a first power output terminal. One end of each of the three second positive lead-out wires is connected in one-to-one correspondence to a positive terminal of each of three-phase wires of the second winding, and the other ends of the three second positive lead-out wires are electrically connected through a wiring terminal to form a second power input terminal. The three second negative lead-out wires are connected in one-to-one correspondence to negative terminals of the three-phase wires of the second winding, and the other ends of the three second negative lead-out wires are electrically connected through a wiring terminal to form a second power output terminal. The first power input terminal is electrically connected to the second power input terminal to form a power supply point of the axial flux motor 11. The first power output terminal is electrically connected to the second power output terminal to form a neutral point of the axial flux motor 11, so that the first winding and the second winding are connected in parallel.

In yet some other embodiments, the axial flux motor 11 is a two-phase motor. A plurality of the lead-out wires 1113 are provided. The plurality of lead-out wires 1113 are divided into two first positive lead-out wires, two first negative lead-out wires, two second positive lead-out wires, and two second negative lead-out wires. One end of each of the two first positive lead-out wires is connected in one-to-one correspondence to a positive terminal of each of two-phase wires of the first winding, and the other ends of the two first positive lead-out wires are electrically connected through a wiring terminal to form a first power input terminal. The two first negative lead-out wires are connected in one-to-one correspondence to negative terminals of the two-phase wires of the first winding, and the other ends of the two first negative lead-out wires are electrically connected through a wiring terminal to form a first power output terminal. One end of each of the two second positive lead-out wires is connected in one-to-one correspondence to a positive terminal of each of two-phase wires of the second winding, and the other ends of the two second positive lead-out wires are electrically connected through a wiring terminal to form a second power input terminal. The two second negative lead-out wires are connected in one-to-one correspondence to negative terminals of the two-phase wires of the second winding, and the other ends of the two second negative lead-out wires are electrically connected through a wiring terminal to form a second power output terminal. The first power input terminal is electrically connected to the second power input terminal to form a power supply point of the axial flux motor 11. The first power output terminal is electrically connected to the second power output terminal to form a neutral point of the axial flux motor 11, so that the first winding and the second winding are connected in parallel.

The first winding and the second winding are connected in parallel, so that the first winding and the second winding can have completely identical lead-out structures, thereby effectively reducing the manufacturing cost of the axial flux motor 11.

According to a third aspect, referring to FIG. 3, an embodiment of the present application provides an electric driving apparatus 10 including the axial flux motor 11 according to any one of the above embodiments.

Since the electric driving apparatus 10 provided by this embodiment of the present application adopts the axial flux motor 11 according to any one of the above embodiments, the volume of the electric driving apparatus 10 is effectively reduced.

According to a fourth aspect, referring to FIG. 1, an embodiment of the present application provides an electric driving system 100 including the above electric driving apparatus 10.

Since the electric driving system 100 provided by this embodiment of the present application adopts the above electric driving apparatus 10, the volume of the electric driving system 100 is effectively reduced.

According to a fifth aspect, referring to FIG. 1, an embodiment of the present application provides an electric device including the above electric driving system 100.

Since the electric device provided by this embodiment of the present application adopts the above electric driving system 100, the volume of the electric device is effectively reduced.

The above are only preferred embodiments of the present application and are not intended to limit the present application. Any modifications, equivalent replacements, improvements, and the like, made within the spirit and principle of the present application should be included in the protection scope of the present application.

## Claims

1. A stator applied to an axial flux motor, **characterized in that** the stator comprises:
a stator housing provided with a wire outlet on an axial side;
a stator body accommodated in the stator housing; and
a lead-out wire, wherein one end of the lead-out wire is connected to the stator body, and the other end of the lead-out wire passes through the wire outlet.

2. The stator according to claim 1, **characterized in that** the stator further comprises a sealing member, wherein the sealing member is disposed between the lead-out wire and an edge of the wire outlet.

3. The stator according to claim 2, **characterized in that** the sealing member comprises a connecting portion and a sealing portion, wherein a plurality of lead-out wires are provided, the connecting portion is configured to connect the plurality of lead-out wires, and the sealing portion is disposed between the connecting portion and the edge of the wire outlet.

4. The stator according to claim 3, **characterized in that** the connecting portion is injection-molded and connected to the plurality of lead-out wires.

5. The stator according to any one of claims 2 to 4, **characterized in that** a peripheral side of the sealing member is provided with a slot, and the edge of the wire outlet is engaged in the slot.

6. The stator according to any one of claims 1 to 5, **characterized in that** the stator further comprises a cooling medium, wherein the cooling medium is accommodated in the stator housing.

7. The stator according to any one of claims 1 to 6, **characterized in that** the lead-out wire comprises a flexible portion and a rigid portion, wherein one end of the rigid portion is connected to the stator body, the other end of the rigid portion is connected to one end of the flexible portion, and the other end of the flexible portion passes through the wire outlet.

8. The stator according to claim 7, **characterized in that** the flexible portion comprises a plurality of sheets, wherein the plurality of sheets are stacked and connected.

9. The stator according to claim 8, **characterized in that** ends of the plurality of sheets close to the rigid portion are fused integrally and welded to the rigid portion.

10. The stator according to claim 8 or 9, **characterized in that** ends of the plurality of sheets away from the rigid portion are fused integrally and pass through the wire outlet.

11. The stator according to any one of claims 7 to 10, **characterized in that** the flexible portion comprises a connecting section, a bending section, and a lead-out section, wherein the bending section is connected between one end of the connecting section and one end of the lead-out section, the other end of the connecting section is connected to the rigid portion, and the other end of the lead-out section passes through the wire outlet.

12. The stator according to claim 11, **characterized in that** the bending section has an arc-shaped structure.

13. An axial flux motor, **characterized in that** the axial flux motor comprises the stator according to any one of claims 1 to 12.

14. The axial flux motor according to claim 13, **characterized in that** two stators are provided, the axial flux motor further comprises a rotor, and the rotor is disposed between the two stators.

15. The axial flux motor according to claim 14, **characterized in that** a side of the stator housing facing the rotor is provided with the wire outlet.

16. The axial flux motor according to claim 14 or 15, **characterized in that** the stator body comprises an iron core and a winding wound on the iron core, wherein the two windings are connected in series or parallel via the lead-out wire.

17. The axial flux motor according to claim 13, **characterized in that** the axial flux motor further comprises two rotors, and the stator is disposed between the two rotors.

18. The axial flux motor according to claim 17, **characterized in that** the stator body comprises a first iron core, a second iron core, a first winding wound on the first iron core, and a second winding wound on the second iron core, wherein the lead-out wire is divided into a first lead-out wire connected to the first winding and a second lead-out wire connected to the second winding; two axial sides of the stator housing are each provided with the wire outlet; the first lead-out wire passes through the wire outlet on one axial side of the stator housing; and the second lead-out wire passes through the wire outlet on the other axial side of the stator housing.

19. The axial flux motor according to claim 17 or 18, **characterized in that** the stator body comprises a first iron core, a second iron core, a first winding wound on the first iron core, and a second winding wound on the second iron core, wherein the first winding and the second winding are connected in series or parallel via the lead-out wire.

20. An electric driving apparatus, **characterized in that** the electric driving apparatus comprises the axial flux motor according to any one of claims 13 to 19.

21. An electric driving system, **characterized in that** the electric driving system comprises the electric driving apparatus according to claim 20.

22. An electric device, **characterized in that** the electric device comprises the electric driving system according to claim 21.
